# EUROPEAN PATENT SPECIFICATION

(11) **EP 1 239 629 B1**
(45) Date of publication and mention of the grant of the patent: **12.01.2011**
(21) Application number: 01123843.3
(22) Date of filing: 05.10.2001
(51) Int. Cl.: H04L 9/32

(54) **Method for the safe use and transmission of biometric data for authentication purposes**
Verfahren zur gesicherten Benutzung und Übertragung von biometrischen Daten zur Authentifizierung
Procédé d'utilisation et de transmission sécurisée de données biométriques pour l'authentification

(30) Priority: 05.03.2001 EP 01105292
(43) Date of publication of application: 11.09.2002
(73) Proprietor: Telefonaktiebolaget LM Ericsson (publ), 164 83 Stockholm (SE)
(72) Inventor: Schuba, Marko, 52134 Herzogenrath (DE); Wrona, Konrad, 52074 Aachen (DE); Quinet, Raphael, 4550 Naudrin (BE)
(74) Representative: Tonscheidt, Andreas

(56) References cited:
- EP-A- 0 935 221
- EP-A- 0 986 209

## Description

### Field of invention

The invention relates to a method for the safe use and transmission of biometric data to authenticate a user towards a unit via a client. The invention further relates to a client, a unit, and an authentication instance to perform said method.

### Description of prior art

A large number of applications exist where authentication of a user is required, for example access-systems or online banking. The mostly applied methods for authentication are possession of a physical object e.g. a key or a card or the use of confidential information e.g. a Personal Identification Number PIN or a password, stored at an authentication instance and known to the user.

A disadvantage of the usage of physical objects is that they can be lost by or stolen from the user.

As users are given several passwords in different contexts, many users write down their passwords in this way degrading the trustworthiness of the confidential information.

Therefore a need for safer authentication methods that overcome the disadvantages of the usage of physical objects or confidential information exists.

Another known method for authentication is the usage of biometric characteristics of a user. Biometric authentication is a method to identify a person unambiguously based on unique individual anatomical patterns as iris, retinal skin, fingerprints, hand geometry, ears or face or characteristic individual behavior of the user e.g. voice or handwriting.

The term biological pattern refers to anatomical patterns as well as patterns of individual behavior.

A biological pattern is measured using for example a camera, a laser-scanner, a microphone or a pressure-sensitive pen and the resulting signal is recorded.

In the following the term biometric data refers to data stemming from the measurement of some biological pattern. The term pattern of biometric data refers to biometric data stemming from the measurement of a particular biological pattern e.g. a picture of the fingerprint of the right thumb of a user.

In said authentication methods, a recorded pattern of biometric data is compared to a prestored pattern of biometric data of the user. If the recorded pattern of biometric data and the prestored pattern of biometric data match to a sufficient degree, the user is authenticated. Biometric techniques could offer a convenient method for authentication that overcomes the disadvantages of the usage of physical objects and confidential information. Said techniques are described in more detail in "Biometrics" by Anil Jain, Ruud Bolle and Sharath Pankanti, Kluver Academic Publishers, 1998.

Today's biometric authentication methods are based on closed systems, comprising the measurement device, a biometric data storage, a comparison unit capable of comparing a recorded pattern of biometric data with a prestored pattern of biometric data. Using biometric for authentication towards different institutions would require installing several such closed systems. This would implicate spreading of the biometric data and means an enhanced risk of one of the biometric data storages to be forced open and biometric data to be revealed.

As biometric data are unique they cannot be exchanged. As the number of biological patterns of one user is limited, patterns of biometric data cannot be marked invalid arbitrarily often, when they are revealed. This means that biometric data are sensitive data. The demand on their secure handling is therefore high and spreading of biometric data is undesirable.

EP 0 986 209 discloses a remote authentication system comprising an authentication server, a web server and a user terminal connected by a communications network, wherein the user terminal transmits encrypted biometric data to be evaluated by the authentication server.

EP 0 935 221 discloses a similar remote authentication system also comprising an authentication server, a web server and a user terminal connected by a communications network. The user terminal comprises a plurality of biometrics acquisition devices and the authentication server has stored a corresponding plurality of authentication information acquisition softwares, wherein a selected one of these softwares is to be downloaded to the user terminal.

It is object of the invention to provide an authentication of a user towards a unit using biometric data that avoids spreading of the biometric data.

### Summary of the invention

This object is achieved by the independent claims.

Advantageous embodiments are described in dependent claims.

The term client refers to any kind of user operated device that is capable of performing a communication with the user, wherein an authentication of the user is one objective of the communication. Examples for clients are a user interface of a vending machine or a cash dispenser, a personal computer, or a mobile station of a user of a telecommunication network.

The term unit refers to any kind of device requesting authentication of a user. Examples for units are units offering services or goods to a user e.g. a vending machine, a cash dispenser or a server offering a service or enabling bank accounts.

The client and the unit do not need to be physically separated i.e. the terms also refer to a device capable of performing a communication with a user and requesting authentication of the user, e.g. a vending machine or a cash dispenser comprising a user interface.

The term authentication instance refers to a server operated by a trusted third party, storing at least one pattern of biometric data for each user.

The proposed method comprises a sequence of messages exchanged between the client C1, C2, C3, the unit AR1, AR2, AR3 and the authentication instance AI1, AI2, AI3 and processing steps performed at the client C1, C2, C3 and the authentication instance AI1, AI2, AI3. The client C1, C2, C3 is requested 1, 32, 41, preferably by the unit AR1, AR2, AR3, to initiate authentication. Afterwards the authentication instance AI1, AI2, AI3 is requested 3, 33, 42 to perform the authentication. The request can be for example sent 2, 32, 42 by the client C1, C2, C3. The client C1, C2, C3 is then requested 4, 34, 43, for example by the authentication instance AI1, AI2, AI3, to send biometric data of the user in order to authenticate said user. A pattern of biometric data of the user is recorded using a measurement device. Preferably the pattern is recorded by the client C1, C2, C3. The pattern of biometric data is encrypted and sent 5, 36, 44 to the authentication instance AI1, AI2, AI3, for example by the client C1, C2, C3. The authentication instance AI1, AI2, AI3 decrypts the received data and performs a comparison of the decrypted data to a prestored pattern of biometric data of the user.

The authentication instance AI1, AI2, AI3 sends 6, 37, 45 a result of the comparison, for example to the unit AR1, AR2, AR3.

It is an advantage of the proposed method that the user can ask for authentication towards different units without needing to reveal her sensitive biometric data to the units but reveal sensitive biometric data only once to the authentication instance AI1, AI2, AI3.

Another advantage is that an institution that is not willing to or able to take care for the secure handling of biometric data of its users can use biometric data for authentication of its users.

It is further advantageous that the unit AR1, AR2, AR3 can accept authentication via different clients without needing to trust a message from a client C1, C2, C3 acknowledging the authentication of the user.

Further advantageous is a method wherein the unit AR1, AR2 relays signals between the authentication instance AI1, AI2 and the client C1, C2. This has the advantage that the unit AR1, AR2 does not receive messages from an unknown party.

Further advantageous is the storage of a plurality of patterns of biometric data for each user and a selection of one of said patterns of biometric data for the authentication process according to the proposed method. In that case the request to send biometric data contains an identification of the selected pattern of biometric data, and the user is requested to send biometric data matching to the selected pattern. The received pattern of biometric data is then compared to the selected pattern of biometric data. This reduces the value of a single pattern of biometric data picked up by an eavesdropper. Furthermore the trustworthiness of a pattern of biometric data received by the authentication instance AI1, AI2, AI3 is enhanced.

Further advantageous is the encryption of the request to send biometric data containing the identification of the selected pattern. This reduces the value of a set of patterns of biometric data picked up by an eavesdropper even if the eavesdropper is in possession of several patterns of biometric data of a user. Thus the trustworthiness of a pattern of biometric data received by the authentication instance AI1, AI2, AI3 is further enhanced.

Further advantageous is the extraction of significant characteristics of the pattern of biometric data before encrypting them. This has two advantages: Firstly the amount of data to be transmitted for signalling purposes is reduced. Secondly a recorded sample of biometric data picked up by an eavesdropper is of no account if the eavesdropper is not in possession of the algorithm for extracting significant characteristics of the biometric data.

Further advantageous is the usage of a number allowing a hardware identification of the client C1, C2, C3 in the message sending the encrypted pattern of biometric data to the authentication instance AI1, AI2, AI3. Thus the trustworthiness of the message sending encrypted biometric data is enhanced.

The invented authentication instance AI1, AI2, AI3 adapted to perform the related steps of the proposed method comprises an input/output unit IO-U1 for exchanging messages and data, a decryption unit DU for decrypting biometric data, a biometric data storage BDS, storing at least one pattern of biometric data for each user, a comparison unit CU for comparing two patterns of biometric data, and a processing unit PU for processing information and coordinating the units.

In order to be able to encrypt outgoing messages, e.g. the request to send biometric data, the authentication instance AI1, AI2, AI3 additionally comprises a message encryption unit MEU.

The client C1, C2, C3 adapted to perform the related steps of the proposed method comprises an input/output unit IO-U2, receiving information from and sending information to communication network parts, a measurement device MD, recording patterns of biometric data of a user, an encryption unit EU encrypting biometric data, a user interface device UI for exchanging information between the user and the client C1, C2, C3, and a central processing unit CPU, processing information and coordinating the units.

It is advantageous, if the client C1, C2, C3 additionally comprises a feature extraction unit that is capable of extracting significant characteristics of the recorded pattern of biometric data.

In order to provide a number for hardware identification a client C1, C2, C3 can additionally comprise a hardware identification memory HWID, storing a hardware identification number.

It is preferable to perform the steps of the proposed method that are related to the authentication instance AI1, AI2, AI3 such that a software program that is loaded into the authentication instance AI1, AI2, AI3 controls the authentication instance AI1, AI2, AI3 in a way that it performs the related steps.

It is preferable to perform the steps of the proposed method that are related to the client C1, C2, C3 such that a software program that is loaded into the client C1, C2, C3 controls the client C1, C2, C3 in a way that it performs the related steps.

It is preferable to perform the steps of the proposed method that are related to the unit AR1, AR2, AR3 such that a software program that is loaded into the unit AR1, AR2, AR3 controls the unit AR1, AR2, AR3 in a way that it performs the related steps.

### Brief description of the drawings

- Fig. 1:: shows an architecture using the invented method,
- Fig. 2:: shows a signal flow for the use of the invented method,
- Fig. 3:: shows an alternative signal flow for the use of the invented method,
- Fig. 4:: shows a further alternative signal flow for the use of the invented method,
- Fig. 5:: shows an authentication instance according to the invention, and
- Fig. 6:: shows a client according to the invention.

### Detailed description of embodiments

In the following the invention is described in more detail by means of embodiments and figures. Equal reference signs indicate equal elements.

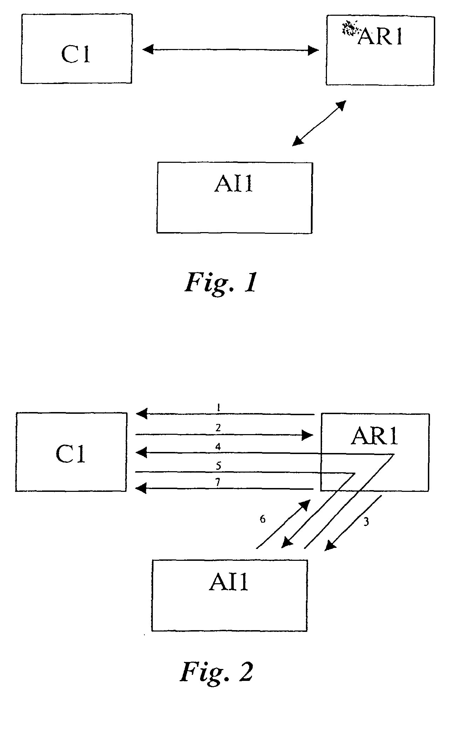

Figure 1 depicts an example of an architecture using the invented method. It shows a client C1 connected to a unit AR1 via a communication link, said unit being connected to an authentication instance AI1 via another communication link.

The communication links are depicted as arrows.

In a further embodiment of the invention, also a connection via a third communication link between the client C1 and the authentication instance AI1 exists. A communication link can be a communication link by wire or a wireless communication link or a combination of both.

In a preferred embodiment the connections are network connections using a computer network, e.g. an Internet Protocol (IP)-based network or network connections using a telecommunication network e.g. a Universal Mobile Telecommunication System (UMTS)-network or a Global System for Mobile-Communications (GSM)-network.

The authentication instance AI1 stores at least one pattern of biometric data. In a preferred embodiment of the invention, the authentication instance AI1 stores a plurality of patterns of biometric data for each user.

The authentication instance can be for example a server in an IP-based network. The authentication instance is operated by a trusted third party institution that is trusted by both the user operating the client and the institution operating the unit. The trusted third party is, for example, a bank, a credit card company, a telecommunication network operator or a company specialised on authentication services.

Figure 2 depicts a signal flow according to the invented method. The figure depicts a client C1, a unit AR1 requesting an authentication, a client C1 and an authentication instance AI1.

In a first step, the unit AR1 requests the client C1 to start the user authentication process in a message 1.

In a next step the client C1 requests authentication of its user by sending a message 2 to the unit AR1. Said message comprises an identification of the user and of the authentication instance AI1. If the authentication instance AI1 is a server in an IP based network, the identification of the authentication instance AI1 can be its IP address or its URL. If the client C1 is a mobile station of a telecommunication network user, the identification of the user can be her M-ISDN number.

In the example of the cash dispenser the identification of the user could be her account number.

In a next step, the unit AR1 requests the authentication instance AI1 to prompt the user for authentication by sending a message 3. The user is identified towards the authentication instance All for example by its identification sent in message 2.

In a preferred embodiment of the invention, the authentication instance AI1 randomly selects one of a plurality of the stored patterns of biometric data for the user of client C1. This can be for example a pattern of biometric data, relating to the pattern of a certain word said by the user, or relating to one of ten possible fingerprints.

In the next step, the authentication instance AI1 sends a message 4 via the unit AR1 to the client C1 in order to prompt the user for authentication. The message 4 comprises a prompt value.

In a preferred embodiment of the invention, the content of the message 4 is encrypted, so that only the client C1 is able to decrypt it, for example using a symmetric key known only to the client C1 and the authentication instance AI1. Said key can be defined during the storage of biometric data.

In an example, which is not part of the invention the message 4 comprises a random number, which is used once for the transmission in order to prevent replay attacks. Said singularly used random numbers are known for example as transaction numbers from online banking systems.

In an embodiment of the invention, the random number is not sent but calculated locally at client C1 and authentication instance AI1, both of them using a random number generator with the same seed. The synchronisation of the random numbers can be achieved by sending a sequence number in the message 4.

In the case that the message has been encrypted, the client C1 decrypts the message 4 in a next step.

In the next step, the client C1 prompts its user for authentication and requests the user to record a certain pattern of biometric data.

In a preferred embodiment the client C1 reduces the recorded pattern of biometric data to its significant characteristics. The algorithm reducing the recorded pattern to its significant characteristics can be changed regularly or in case of a detection of a weak link.

The client C1 encrypts either the recorded pattern of biometric data or in the case the pattern has been reduced to its significant characteristics the client C1 encrypts said significant characteristics.

The encryption is such that only the authentication instance AI1 is able to decrypt the pattern of biometric data respectively its significant characteristics.

In a preferred embodiment of the invention, the pattern of biometric data respectively its significant characteristics are encrypted by combination with a random number in the client C1, for example through XOR.

The encrypted pattern of biometric data respectively its encrypted significant characteristics are sent in a message 5 to the authentication instance AI1 via the unit AR1.

In an embodiment of the invention, the message 5 comprises also a hardware authentication mechanism to identify the client C1. If the client C1 is the mobile station of a GSM or a UMTS network user, said hardware authentication mechanism can for example be based on the International Mobile Subscriber Identity IMSI stored on a Subscriber Identity Module (SIM) respectively a Wireless Identity Module (WIM).

In a next step, the authentication instance decrypts the message 5 thus obtaining the recorded pattern of biometric data respectively its significant characteristics. The decrypted pattern of biometric data is then compared to the prestored pattern of biometric data. In the case the recorded pattern of biometric data has been reduced to its significant characteristics the significant characteristics of the recorded pattern are compared with the significant characteristics of a prestored pattern of biometric data.

Based on the result of the comparison the authentication is successful or not. A message 6 stating whether the authentication has been successful or not is sent to the unit AR1.

In an embodiment of the invention, the unit AR1 relays the result also to the client C1 in order to inform the user in a message 7.

It is an advantage of the implementation depicted in figure 2 that the unit AR1 contacts the authentication instance AI1 and forwards messages sent between the client C1 and the authentication instance AI1. By this, the unit AR1 is certain that it does not receive fraudulent messages from an unknown party.

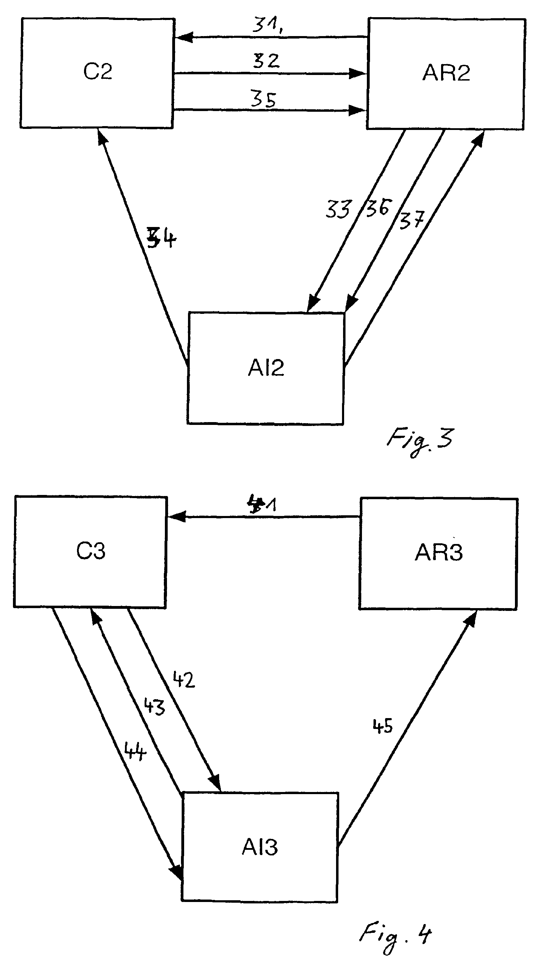

Figure 3 depicts an alternative signal flow according to the invention. The figure depicts a client C2, a unit AR2 requesting an authentication of the client C2 and an authentication instance AI2.

In a first step, the unit AR2 requests the client C2 to start the user authentication process in a message 31.

In a next step the client C2 requests authentication of its user sending a message 32. Said message comprises an identification of the user and of the authentication instance AI2. If the authentication instance AI2 is a server in an IP based network, the identification of the authentication instance AI2 can be its IP address or its Uniform Resource Locator (URL). If the client C2 is a mobile station of a telecommunication network, the identification of the user can be her M-ISDN number.

In a next step, the unit AR2 asks the authentication instance AI2 to prompt the user for authentication by sending a message 33. The user is identified towards the authentication instance AI2 for example by its identification sent in message 32.

In a preferred embodiment of the invention, the authentication instance AI2 randomly selects one of a plurality of the stored patterns of biometric data for the user of client C2. This can be for example a pattern of biometric data relating to the pattern of a certain word said by the user or to one of ten possible fingerprints.

In a next step, the authentication instance AI2 sends a message 34 to the client C2 in order to prompt the user for authentication. The message 34 comprises a prompt value.

In a preferred embodiment of the invention the content of the message 34 is encrypted so that only the client C2 is able to decrypt it, for example using a symmetric key known only to the client C2 and the authentication instance AI2. Said key can be defined during the storage of biometric data.

In an example, which is not part of the invention, the message 34 comprises a random number, which is used once for the transmission in order to prevent replay attacks. Said singularly used random numbers are known for example as transaction numbers from online banking systems.

In an embodiment of the invention, the random number is not sent but calculated locally at client C2 and authentication instance AI2, both of them using a random number generator with the same seed. The synchronisation of the random numbers can be achieved by sending a sequence number in the message 34.

In the case the message has been encrypted, the client C2 decrypts the message 34 in a next step.

In the next step, the client C2 prompts its user for authentication and requests the user to record a certain pattern of biometric.

In a preferred embodiment the client C2 reduces the recorded pattern of biometric data to its significant characteristics. The algorithm reducing the recorded pattern to its significant characteristics can be changed regularly or in case of a detection of a weak link.

The client C2 encrypts either the recorded pattern of biometric data or in the case the pattern has been reduced to its significant characteristics the client C2 encrypts said significant characteristics.

The encryption is such that only the authentication instance AI2 is able to decrypt the pattern of biometric data respectively its significant characteristics.

In a preferred embodiment of the invention, the pattern of biometric data respectively its significant characteristics are encrypted by combination with a random number in the client C2, for example through XOR.

The encrypted pattern of biometric data respectively its encrypted significant characteristics are sent in a message 35 to the unit AR2 that forwards the message to the authentication instance AI2 in a message 36.

Instead of the two messages 35 and 36 a single message containing the encrypted pattern of biometric data can be sent directly from the client C2 to the authentication instance AI2.

In an embodiment of the invention, the messages 35 and 36 comprise also a hardware authentication mechanism to identify the client C2. If the client C2 is the mobile station of a GSM or a UMTS network user, said hardware authentication mechanism can for example be based on the International Mobile Subscriber Identity IMSI stored on the Subscriber Identity Module (SIM) respectively the Wireless Identity Module (WIM).

In a next step, the authentication instance decrypts the message 36 thus obtaining the recorded pattern of biometric data respectively its significant characteristics. The decrypted pattern of biometric data is then compared to the prestored pattern of biometric data. In the case the recorded pattern of biometric data has been reduced to its significant characteristics the significant characteristics of the recorded pattern are compared with the significant characteristics of a prestored pattern of biometric data.

Based on the result the authentication is successful or not. The result of the process is sent to the unit AR2 in a message 37.

In an embodiment of the invention, the unit AR2 relays the result also to the client C2 in order to inform the user in a further message.

It is an advantage of the implementation depicted in Figure 3 that the message requesting a specific pattern of biometric data to be send is not known to the unit. Thus the unit cannot reveal the relationship between the specification of the pattern of biometric data to be sent and the pattern of biometric data itself. In the case that significant characteristics have been extracted from the biometric data the relationship between the significant characteristics to be sent and the related specification cannot be revealed.

Figure 4 depicts an alternative signal flow according to the invention. The figure depicts a client C3, a unit AR3 requesting an authentication, a client C3 and an authentication instance AI3.

In a first step, the unit AR3 requests the client C3 to start the user authentication process in a message 41.

In a next step the client C3 requests authentication of its user by sending a message 42 to the authentication instance, said message comprising an identification of the user.

If the client C3 is the mobile station of a telecommunication network user, the identification of the user can be her M-ISDN number.

In a preferred embodiment of the invention, the authentication instance AI3 randomly selects one of a plurality of the stored patterns of biometric data for the user of client C3. This can be for example a pattern of biometric data relating to the pattern of a certain word said by the user, or relating to one of ten possible fingerprints.

In a next step the authentication instance AI3 sends a message 43 to the client C3 in order to prompt the user for authentication. The message 43 comprises a prompt value. The prompt value requests the user to record biometric data relating to a biological pattern, for example to a print of a particular finger or to the voice pattern of a particular word.

In a preferred embodiment of the invention, the content of the message 43 is encrypted so that only the client C3 is able to decrypt it, for example using a symmetric key known only to the client C3 and the authentication instance AI3. Said key can be defined during the storage of biometric data.

In an example which is not part of the invention, the message 43 comprises a random number, which is used once for the transmission in order to prevent replay attacks. Said singularly used random numbers are known for example as transaction numbers from online banking systems.

In an embodiment of the invention, the random number is not sent but calculated locally at the client C3 and the authentication instance AI3, both of them using a random number generator with the same seed. The synchronisation of the random numbers can be achieved by sending a sequence number in the message 43.

In the case that the message has been encrypted the client C3 decrypts the message 43 in a next step.

In the next step the client C3 prompts its user for authentication and requests the user to record a certain pattern of biometric data according to the prompt value of message 43. In a preferred embodiment the client C3 reduces the recorded pattern of biometric data to its significant characteristics. The algorithm reducing the recorded pattern to its significant characteristics can be changed regularly or in case of a detection of a weak link.

The client C3 encrypts either the recorded pattern of biometric data or in the case the pattern has been reduced to its significant characteristics the client C3 encrypts said significant characteristics.

The encryption is such that only the authentication instance AI3 is able to decrypt the pattern of biometric data respectively its significant characteristics.

In a preferred embodiment of the invention, the pattern of biometric data respectively its significant characteristics are encrypted by combination with a random number in the client C3, for example through XOR.

The encrypted pattern of biometric data, respectively its encrypted significant characteristics, are sent in a message 44 to the authentication instance.

In an embodiment of the invention, the messages 44 comprises also a hardware authentication mechanism to identify the client C3. If the client C3 is the mobile station of a GSM or a UMTS network user, said hardware authentication mechanism can for example be based on the International Mobile Subscriber Identity IMSI stored on the Subscriber Identity Module (SIM) respectively the Wireless Identity Module (WIM).

In a next step, the authentication instance decrypts the message 44 thus obtaining the recorded pattern of biometric data respectively its significant characteristics. The decrypted pattern of biometric data is then compared to the prestored pattern of biometric data. In the case the recorded pattern of biometric data has been reduced to its significant characteristics the significant characteristics of the recorded pattern are compared with the significant characteristics of a prestored pattern of biometric data.

Based on the result of the comparison the authentication is successful or not. The result of the process is sent to the unit AR3 in a message 45.

In an embodiment of the invention, the unit AR3 relays the result also to the client C3 in order to inform the user in a further message.

It is an advantage of the implementation depicted in figure 3 that the authentication instance AI3 and the client C3 exchange messages for the authentication directly. By this, a fraudulent unit AR3 cannot tap the exchanged data.

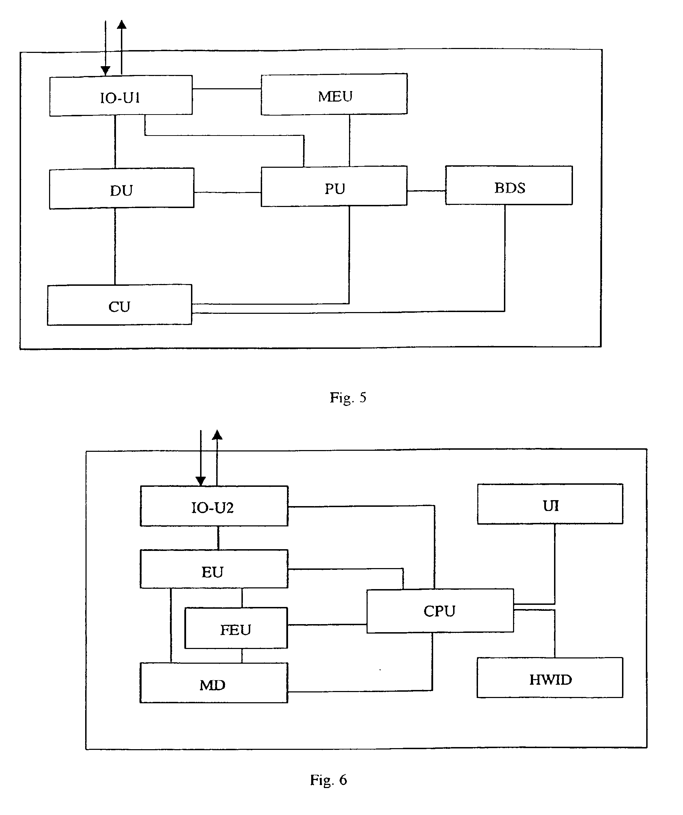

Figure 5 depicts a hardware architecture of an authentication instance according to the invention. In the context of a telecommunication network, for example a GSM network or a UMTS network, said architecture could be part of an authentication centre. In the context of an IP network the depicted architecture could be part of a server used for authentication purposes.

The authentication instance comprises an input/output unit IO-U1, a message encryption unit MEU, a decryption unit DU, a biometric data storage BDS, a comparison unit CU, and a processing unit PU.

The task of the input/output unit IO-U1 is to connect the authentication instance to other entities. In the case that an IP based network is used, the input/output unit IO-U1 could be a network interface card. The processing unit PU is connected to the input/output unit IO-U1 and the message encryption unit MEU.

The task of the message encryption unit MEU is to encrypt outgoing messages. It is connected to the input/output unit IO-U1 and the processing unit PU.

The input/output unit IO-U1 is connected to a comparison unit CU via the decryption unit DU. The decryption unit DU is adapted to decrypt incoming messages.

The comparison unit is connected to the biometric data storage BDS, storing at least one pattern of biometric data.

The comparison unit CU is adapted to perform a comparison between a prestored pattern of biometric data from the biometric data storage BDS and a decrypted pattern of biometric data received via the decryption unit DU and the input/output unit IO-U1. The comparison could for example be based on the comparison of feature vectors computed from patterns of biometric data.

The processing unit PU is connected to the input/output unit IO-U1, the message encryption unit MEU, the decryption unit DU, the biometric data storage BDS and the comparison unit CU. The task of the processing unit PU is to process information and coordinate the units it is connected to.

Figure 6 depicts a hardware architecture of a client according to the invention. In the context of a UMTS telecommunication network the client could be a mobile station of a telecommunication network user. The client comprises an input/output unit IO-U2, a measurement device MD, an encryption unit EU, a feature extraction unit FEU, a hardware identification memory HWID, a user interface device UI and a central processing unit CPU.

The measurement device MD can be for example a camera or a scanner capable of recording an image of a fingerprint of a user or a microphone for recording voice.

The encryption unit EU can be any kind of unit capable of encrypting data.

Optionally, the feature extraction unit FEU is intermediate between the measurement device MD and the encryption unit EU. The feature extraction unit FEU can be, for example, a unit extracting significant lines and cross-over points from an image of a fingerprint.

The task of the input/output unit IO-U2 is to connect the client to other entities. In the example of the mobile equipment of a UMTS user the input/output unit IO-U2 is the radio interface of the mobile equipment.

The measurement device MD is connected to the input/output unit IO-U2 via the encryption unit EU.

In the example case that the client is implemented as a mobile station of a UMTS subscriber, the user interface comprises a display and a keypad. In that example the hardware identification memory HWID can be implemented as a Wireless identification Module WIM storing an International Subscriber Identity IMSI.

The central processing unit CPU is connected to the input/output unit IO-U2, the measurement device MD, the encryption unit EU, the feature extraction unit FEU, the hardware identification memory HWID, and the user interface device UI. The task of the central processing unit CPU is to process information and coordinate the units it is connected to.

Each of the messages 1, 2, 3, 4, 5, 6, 7, 31, 32, 33, 34, 35, 36, 37, 41, 42, 43, 44, and 45 can be encrypted. Said encryption can be for example performed using a Secure Sockets Layer (SSL) protocol.

## Claims

1. Method for the safe use and transmission of biometric data to authenticate a user towards a unit (AR1; AR2; AR3) via a client (C1; C2; C3), the authentication being performed by an authentication instance (AI1; AI2; AI3), using at least one prestored pattern of biometric data, the method comprising the steps of
- requesting (1; 31; 41) the client (C1; C2; C3) to initiate the authentication,
- requesting (2, 3; 32, 33; 42) the authentication instance (AI1; AI2; AI3) to perform the authentication,
- requesting (4; 34; 43) the client (C1; C2; C3) to send biometric data,
- recording a pattern of biometric data of a user using a measurement device,
- encrypting the pattern of biometric data,
- sending (5; 35, 36; 44) the encrypted pattern of biometric data to the authentication instance (AI1; AI2; AI3),
- decrypting the pattern of biometric data at the authentication instance (AI1; AI2; AI3),
- performing a comparison of the decrypted pattern of biometric data with the prestored pattern of biometric data at the authentication instance (AI1; AI2; AI3), and
- sending (6; 37; 45) a result of the comparison to the unit (AR1; AR2; AR3),
**characterized in that**
the prestored pattern used for the authentication process is randomly selected by the authentication instance out of a plurality of patterns of biometric data stored for the client, and the selecting the pattern is performed by means of a random number calculated both at the client (C1; C2; C3) and at the authentication instance (AI1; AI2; AI3), both of them using a random number generator with the same seed.

2. Method for the safe use and transmission of biometric data to authenticate a user towards a unit (AR1; AR2; AR3) via a client (C1; C2; C3), the authentification being performed by an authentication instance (AI1; AI2; AI3) using at least one prestored pattern of biometric data for said authentication, wherein the following steps are performed by the authentication instance (AI1; AI2; AI3):
- receiving (3; 33; 42) a request to perform an authentication of a user,
- requesting (4; 34; 43) the client (C1; C2; C3) to send biometric data,
- receiving (5; 36; 44) an encrypted pattern of biometric data of the user,
- decrypting the received pattern of biometric data,
- performing a comparison of the decrypted pattern of biometric data with the prestored pattern of biometric data, and
- sending (6; 37; 45) a result of the comparison to the unit (AR1; AR2; AR3),
**characterized in that**
the prestored pattern used for the authentication process is randomly selected by the authentication instance out of a plurality of patterns of biometric data stored for the client, and the selecting the pattern is performed by means of a random number calculated both at the client (C1; C2; C3) and at the authentication instance (AI1; AI2; AI3), both of them using a random number generator with the same seed.

3. Method according to claim 1, wherein the request to send biometric data is encrypted such, that only the client (C1; C2; C3) is able to decrypt it.

4. Method for the safe use and transmission of biometric data
to authenticate a user towards a unit (AR1; AR2; AR3) via a client (C1; C2; C3),
the authentication being performed by an authentication instance (AI1; AI2; AI3) using at least one prestored pattern of biometric data, wherein the following steps are performed by the client:
- receiving (1; 31; 41) a request to initiate an authentication,
- requesting (2, 3; 32, 33; 42) the authentication instance (AI1; AI2; AI3) to perform an authentication,
- receiving (4; 34; 43) a request to send biometric data,
- recording a pattern of biometric data of a user using a measurement device,
- encrypting the pattern of biometric data, and
- sending (5; 35, 36; 44) the encrypted data to the authentication instance (AI1; AI2; AI3),
**characterized by**
recording a pattern of biometric data matching to a pattern of biometric data randomly selected by the authentication instance out of a plurality of patterns of biometric data stored for the client, and performing the identification of the selected pattern by means of a random number calculated both at the client (C1; C2; C3) and at the authentication instance (AI1; AI2; AI3), both of them using a random number generator with the same seed.

5. Method according to claim 4 with the additional step of extracting significant characteristics of the pattern of biometric data before encrypting them.

6. Method according to claim 4 or 5 wherein the message sending the encrypted pattern of biometric data contains a number allowing a hardware identification of the client.

7. Authentication instance (AI1; AI2; AI3) comprising:
- an input/output unit (IO-U1), for exchanging information with communication network parts,
- a decryption unit (DU) for decrypting biometric data,
- a biometric data storage (BDS), storing at least one pattern of biometric data for each user,
- a comparison unit (CU) for comparing a decrypted pattern of biometric data with a prestored pattern of biometric data, and
- a processing unit (PU) for processing information and coordinating the units,
**characterized by** pattern selection means for randomly selecting the prestored pattern used for the authentication process out of a plurality of patterns of biometric data stored for the client wherein pattern selection means uses a random number generator calculating a random number with the same seed as a random number generator used by the client for identifying the pattern selected by the authentication instance.

8. Authentication instance (AI1; AI2; AI3) according to claim 7 additionally comprising a message encryption unit (MEU), encrypting outgoing messages.

9. Client (C1; C2; C3) comprising,
- an input/output unit (IO-U2), for exchanging information with communication network parts,
- a measurement device (MD), recording patterns of biometric data of a user,
- an encryption unit (EU) encrypting biometric data,
- a user interface device (UI) for exchanging information between the user and the client, and
- a central processing unit (CPU), processing information and coordinating the units,
**characterized by**
comprising means for identifying a pattern randomly selected by the authentication instance (AI1; AI2; AI3) out of a plurality of patterns of biometric data stored for the client, wherein the means for identifying the pattern uses a random number generator calculating a random number with the same seed as a random number generator used by the authentication instance for selecting the pattern.

10. Client (C1; C2; C3) according to claim 9 additionally comprising a feature extraction unit (FEU), reducing a pattern of biometric data to their significant characteristics.

11. Client (C1; C2; C3) according to claim 9 or 10 additionally comprising a hardware identification memory (HWID), storing a hardware identification number.

12. Software loadable into an authentication (AI1; AI2; AI3) instance, **characterised in that** the software is adapted to control the authentication instance (AI1; AI2; AI3) in a way that it performs a method according to any of the claims 2 to 3.

13. Software loadable into a client (C1; C2; C3), **characterised in that** it is adapted to control the client (C1; C2; C3) in a way that it performs a method according to any of the claims 4 to 6.

## Patentansprüche

1. Verfahren zur sicheren Verwendung und Übertragung von biometrischen Daten zum Authentifizieren eines Benutzers gegenüber einer Einheit (AR1; AR2; AR3) über einen Client (C1; C2; C3), wobei die Authentifizierung durch eine Authentifizierungsinstanz (AI1; AI2; AI3) unter Verwendung wenigstens eines vorgespeicherten Musters von biometrischen Daten durchgeführt wird, wobei das Verfahren die folgenden Schritte umfasst:
- Auffordern (1; 31; 41) des Clients (C1; C2; C3) zum Einleiten der Authentifizierung,
- Auffordern (2, 3; 32, 33; 42) der Authentifizierungsinstanz (AI1; AI2; AI3) zum Durchführen der Authentifizierung,
- Auffordern (4; 34; 43) des Clients (C1; C2; C3) zum Senden von biometrischen Daten,
- Aufzeichnen eines Musters von biometrischen Daten eines Benutzers unter Verwendung einer Messvorrichtung,
- Verschlüsseln des Musters von biometrischen Daten,
- Senden (5; 35, 36; 44) des verschlüsselten Musters von biometrischen Daten an die Authentifizierungsinstanz (AI1; AI2; AI3),
- Entschlüsseln des Musters von biometrischen Daten an der Authentifizierungsinstanz (AI1; AI2; AI3),
- Durchführen eines Vergleichs des entschlüsselten Musters von biometrischen Daten mit dem vorgespeicherten Muster von biometrischen Daten an der Authentifizierungsinstanz (AI1; AI2; AI3), und
- Senden (6; 37; 45) eines Ergebnisses des Vergleichs an die Einheit (AR1; AR2; AR3),
**dadurch gekennzeichnet, dass**
das vorgespeicherte Muster, das für den Authentifizierungsprozess verwendet wird, durch die Authentifizierungsinstanz aus einer Mehrzahl von Mustern von biometrischen Daten, die für den Client gespeichert sind, zufällig ausgewählt wird, und das Auswählen des Musters mittels einer Zufallszahl erfolgt, die sowohl am Client (C1; C2; C3) als auch an der Authentifizierungsinstanz (AI1; AI2; AI3) berechnet wird, wobei beide von ihnen einen Zufallszahlengenerator mit demselben Anfangswert verwenden.

2. Verfahren zur sicheren Verwendung und Übertragung von biometrischen Daten zum Authentifizieren eines Benutzers gegenüber einer Einheit (AR1; AR2; AR3) über einen Client (C1; C2; C3), wobei die Authentifizierung durch eine Authentifizierungsinstanz (AI1; AI2; AI3) unter Verwendung wenigstens eines vorgespeicherten Musters von biometrischen Daten für die Authentifizierung durchgeführt wird, wobei die folgenden Schritte durch die Authentifizierungsinstanz (AI1; AI2; AI3) ausgeführt werden:
- Empfangen (3; 33; 42) einer Aufforderung zum Durchführen einer Authentifizierung eines Benutzers,
- Auffordern (4; 34; 43) des Clients (C1; C2; C3) zum Senden von biometrischen Daten,
- Empfangen (5; 36; 44) eines verschlüsselten Musters von biometrischen Daten des Benutzers,
- Entschlüsseln des empfangenen Musters von biometrischen Daten,
- Durchführen eines Vergleichs des entschlüsselten Musters von biometrischen Daten mit dem vorgespeicherten Muster von biometrischen Daten, und
- Senden (6; 37; 45) eines Ergebnisses des Vergleichs an die Einheit (AR1; AR2; AR3),
**dadurch gekennzeichnet, dass**
das vorgespeicherte Muster, das für den Authentifizierungsprozess verwendet wird, durch die Authentifizierungsinstanz aus einer Mehrzahl von Mustern von biometrischen Daten, die für den Client gespeichert sind, zufällig ausgewählt wird, und das Auswählen des Musters mittels einer Zufallszahl erfolgt, die sowohl am Client (C1; C2; C3) als auch an der Authentifizierungsinstanz (AI1; AI2; AI3) berechnet wird, wobei beide von ihnen einen Zufallszahlengenerator mit demselben Anfangswert verwenden.

3. Verfahren nach Anspruch 1, wobei die Aufforderung zum Senden von biometrischen Daten derart verschlüsselt wird, dass nur der Client (C1; C2; C3) imstande ist, sie zu entschlüsseln.

4. Verfahren zur sicheren Verwendung und Übertragung von biometrischen Daten zum Authentifizieren eines Benutzers gegenüber einer Einheit (AR1; AR2; AR3) über einen Client (C1; C2; C3), wobei die Authentifizierung durch eine Authentifizierungsinstanz (AI1; AI2; AI3) unter Verwendung wenigstens eines vorgespeicherten Musters von biometrischen Daten durchgeführt wird, wobei die folgenden Schritte durch den Client ausgeführt werden:
- Empfangen (1; 31; 41) einer Aufforderung zum Einleiten einer Authentifizierung,
- Auffordern (2, 3; 32, 33; 42) der Authentifizierungsinstanz (AI1; AI2; AI3) zum Durchführen einer Authentifizierung,
- Empfangen (4; 34; 43) einer Aufforderung zum Senden von biometrischen Daten,
- Aufzeichnen eines Musters von biometrischen Daten eines Benutzers unter Verwendung einer Messvorrichtung,
- Verschlüsseln des Musters von biometrischen Daten, und
- Senden (5; 35, 36; 44) der verschlüsselten Daten an die Authentifizierungsinstanz (AI1; AI2; AI3),
**gekennzeichnet durch**
Aufzeichnen eines Musters von biometrischen Daten, das mit einem Muster von biometrischen Daten übereinstimmt, das **durch** die Authentifizierungsinstanz aus einer Mehrzahl von Mustern von biometrischen Daten, die für den Client gespeichert sind, ausgewählt wird, und Durchführen der Identifikation des ausgewählten Musters mittels einer Zufallszahl, die sowohl am Client (C1; C2; C3) als auch an der Authentifizierungsinstanz (AI1; AI2; AI3) berechnet wird, wobei beide von ihnen einen Zufallszahlengenerator mit demselben Anfangswert verwenden.

5. Verfahren nach Anspruch 4 mit dem zusätzlichen Schritt des Extrahierens von signifikanten Charakteristiken des Musters von biometrischen Daten vor ihrer Verschlüsselung.

6. Verfahren nach Anspruch 4 oder 5, wobei die Nachricht, die das verschlüsselte Muster von biometrischen Daten sendet, eine Nummer enthält, die eine Hardware-Identifikation des Clients ermöglicht.

7. Authentifizierungsinstanz (AI1; AI2; AI3), umfassend:
- eine Eingabe-/Ausgabeeinheit (IO-U1) zum Austauschen von Informationen mit Kommunikationsnetzteilen,
- eine Entschlüsselungseinheit (DU) zum Entschlüsseln von biometrischen Daten,
- einen Biometriedatenspeicher (BDS), der mindestens ein Muster von biometrischen Daten für jeden Benutzer speichert,
- eine Vergleichseinheit (CU) zum Vergleichen eines entschlüsselten Musters von biometrischen Daten mit einem vorgespeicherten Muster von biometrischen Daten und
- eine Verarbeitungseinheit (PU) zum Verarbeiten von Informationen und Koordinieren der Einheiten,
**gekennzeichnet durch**
Musterauswahlmittel zum zufälligen Auswählen des vorgespeicherten Musters, das für den Authentifizierungsprozess verwendet wird, aus einer Mehrzahl von Mustern von biometrischen Daten, die für den Client gespeichert sind, wobei das Musterauswahlmittel einen Zufallszahlengenerator verwendet, der eine Zufallszahl mit demselben Anfangswert wie ein Zufallszahlengenerator berechnet, der **durch** den Client zum Identifizieren des Musters verwendet wird, das **durch** die Authentifizierungsinstanz ausgewählt wird.

8. Authentifizierungsinstanz (AI1; AI2; AI3) nach Anspruch 7, zusätzlich umfassend eine Nachrichtenverschlüsselungseinheit (MEU) zum Verschlüsseln von abgehenden Nachrichten.

9. Client (C1; C2; C3), umfassend:
- eine Eingabe-/Ausgabeeinheit (IO-U2) zum Austauschen von Informationen mit Kommunikationsnetzteilen,
- eine Messvorrichtung (MD), die Muster von biometrischen Daten eines Benutzers aufzeichnet,
- eine Verschlüsselungseinheit (EU), die biometrische Daten verschlüsselt,
- eine Benutzerschnittstelle (UI) zum Austauschen von Informationen zwischen dem Benutzer und dem Client, und
- eine zentrale Verarbeitungseinheit (CPU), die Informationen verarbeitet und die Einheiten koordiniert,
**gekennzeichnet durch**
Umfassen von Mitteln zum Identifizieren eines Musters, das **durch** die Authentifizierungsinstanz (AI1; AI2; AI3) aus einer Mehrzahl von Mustern von biometrischen Daten, die für den Client gespeichert sind, zufällig ausgewählt wird, wobei das Mittel zum Identifizieren des Musters einen Zufallszahlengenerator verwendet, der eine Zufallszahl mit demselben Anfangswert wie ein Zufallszahlengenerator berechnet, der **durch** die Authentifizierungsinstanz zum Auswählen des Musters verwendet wird.

10. Client (C1; C2; C3) nach Anspruch 9, zusätzlich umfassend eine Merkmalsextraktionseinheit (FEU), die ein Muster von biometrischen Daten auf seine signifikanten Charakteristiken reduziert.

11. Client (C1; C2; C3) nach Anspruch 9 oder 10, zusätzlich umfassend einen Hardware-Identifikationsspeicher (HWID), der eine Hardware-Identifikationsnummer speichert.

12. Software, die auf eine Authentifizierungsinstanz (AI1; AI2; AI3) geladen werden kann, **dadurch gekennzeichnet, dass** die Software so ausgelegt ist, dass sie die Authentifizierungsinstanz (AI1; AI2; AI3) derart steuert, dass sie ein Verfahren nach einem der Ansprüche 2 bis 3 durchführt.

13. Software, die auf einen Client (C1; C2; C3) geladen werden kann, **dadurch gekennzeichnet, dass** sie so ausgelegt ist, dass sie den Client (C1; C2; C3) derart steuert, dass er ein Verfahren nach einem der Ansprüche 4 bis 6 durchführt.

## Revendications

1. Procédé pour l'utilisation et la transmission sécurisée de données biométriques afin d'authentifier un utilisateur vers une unité (AR1 ; AR2 ; AR3) via un client (C1 ; C2 ; C3), l'authentification étant effectuée par une instance d'authentification (AI1 ; AI2 ; AI3), en utilisant au moins une forme prémémorisée de données biométriques, le procédé comprenant les étapes consistant à :
- demander (1 ; 31 ; 41) au client (C1 ; C2 ; C3) d'amorcer l'authentification,
- demander (2 ; 3 ; 32 ; 33 ; 42) à l'instance d'authentification (AI1 ; AI2 ; AI3) d'effectuer l'authentification,
- demander (4 ; 34 ; 43) au client (C1 ; C2 ; C3) d'envoyer des données biométriques,
- enregistrer une forme de données biométriques d'un utilisateur en utilisant un dispositif de mesure,
- crypter la forme de données biométriques,
- envoyer (5 ; 35 ; 36 ; 44) la forme cryptée de données biométriques à l'instance d'authentification (AI1 ; AI2 ; AI3),
- décrypter la forme de données biométriques au niveau de l'instance d'authentification (AI1 ; AI2 ; AI3),
- effectuer une comparaison de la forme cryptée de données biométriques avec la forme prémémorisée de données biométriques au niveau de l'instance d'authentification (AI1 ; AI2 ; AI3), et
- envoyer (6 ; 37 ; 45) un résultat de la comparaison à l'unité (AR1 ; AR2 ; AR3),
**caractérisé en ce que**
la forme prémémorisée utilisée pour le processus d'authentification est sélectionnée aléatoirement par l'instance d'authentification parmi une plurlaité de formes de données biométriques mémorisées pour le client, et la sélection de la forme est effectuée au moyen d'un nombre aléatoire calculé à la fois au niveau du client (C2 ; C2 ; C3) et au niveau de l'instance d'authentification (AI1 ; AI2 ; AI3), utilisant tous deux un générateur de nombres aléatoires avec la même graine.

2. Procédé pour l'utilisation et la transmission sécurisée de données biométriques afin d'authentifier un utilisateur vers une unité (AR1 ; AR2 ; AR3) via un client (C1 ; C2 ; C3), l'authentification étant effectuée par une instance d'authentification (AI1 ; AI2 ; AI3) utilisant au moins une forme prémémorisée de données biométriques pour ladite authentification, dans lequel les étapes suivantes sont effectuées par l'instance d'authentification (AI1 ; AI2 ; AI3) :
- recevoir (3 ; 33 ; 42) une demande pour effectuer une authentification d'un utilisateur ;
- demander (4 ; 34 ; 43) une forme cryptée de données biométriques de l'utilisateur,
- décrypter la forme reçue de données biométriques,
- effectuer une comparaison de la forme décryptée de données biométriques avec la forme prémémorisée de données biométriques, et
- envoyer (6 ; 37 ; 45) un résultat de la comparaison à l'unité (AR1 ; AR2 ; AR3),
**caractérisé en ce que**
la forme prémémorisée utilisée pour le processus d'authentification est sélectionnée aléatoirement par l'instance d'authentification parmi une pluralité de formes de données biométriques mémorisées pour le client, et la sélection de la forme est effectuée au moyen d'un nombre aléatoire calculé à la fois au niveau du client (C1 ; C2 ; C3) et au niveau de l'instance d'authentification (AI1 ; AI2 ; AI3), utilisant tous deux un générateur de nombres aléatoires avec la même graine.

3. Procédé selon la revendication 1, dans lequel la demande d'envoi de données biométriques est cryptée de sorte que seul le client (C1 ; C2 ; C3) soit en mesure de la décrypter.

4. Procédé pour l'utilisation et la transmission sécurisée de données biométriques afin d'authentifier un utilisateur vers une unité (AR1 ; AR2 ; AR3) via un client (C1 ; C2 ; C3), l'authentification étant effectuée par une instance d'authentification (AI1 ; AI2 ; AI3) utilisant au moins une forme prémémorisée de données biométriques, dans lequel les étapes suivantes sont effectuées par le client consistant à :
- recevoir (1 ; 31 ; 41) une demande d'amorce d'une authentification,
- demander (2 ; 3 ; 32 ; 33 ; 42) à l'instance d'authentification (AI1 ; AI2 ; AI3) d'effectuer une authentification,
- recevoir (4 ; 34 ; 43) une demande d'envoi de données biométriques,
- enregistrer une forme de données biométriques d'un utilisateur en utilisant un dispositif de mesure,
- crypter la forme de données biométriques, et
- envoyer (5 ; 35 ; 36 ; 44) les données cryptées à l'instance d'authentification (AI1 ; AI2 ; AI3),
**caractérisé par**
l'enregistrement d'une forme de données biométriques concordant avec une forme de données biométriques sélectionnée aléatoirement par l'instance d'authentification parmi une pluralité de formes de données biométriques mémorisées pour le client, et effectuer l'identification de la forme sélectionée au moyen d'un nombre aléatoire calculé à la fois au niveau du client (C1 ; C2 ; C3) et au niveau de l'instance d'authentification (AI1 ; AI2 ; AI3), utilisant tous deux un générateur de nombres aléatoires avec la même graine.

5. Procédé selon la revendication 4 comportant l'étape additionnelle d'extraction des caractéristiques significatives de la forme de données biométriques avant de les crypter.

6. Procédé selon la revendication 4 ou 5, dans lequel le message envoyant la forme cryptée de données biométriques contient un nombre permettant une identification du matériel du client.

7. Instance d'authentification (AI1 ; AI2 ; AI3) comprenant :
- une unité d'entrée/sortie (IO-U1) pour échanger des informations avec des parties du réseau de communication,
- une unité de décryptage (DU) pour décrypter des données biométriques,
- une mémoire de données biométriques (BDS) mémorisant au moins une forme de données biométriques pour chaque utilisateur,
- une unité de comparaison (CU) pour comparer une forme décryptée de données biométriques avec une forme prémémorisée de données biométriques et
- une unité de traitement (PU) pour traiter l'information et coordonner les unités,
**caractérisé par**
un moyen de sélection de forme pour sélectionner aléatoirement la forme prémémorisée utilisée pour le processus d'authentification parmi une pluralité de formes de données biométriques mémorisées pour le client, dans lequel le moyen de sélection de forme utilise un générateur de nombre aléatoire calculant un nombre aléatoire avec la même graine comme un générateur de nombre aléatoire utilisé par le client pour identifier la forme sélectionnée par l'instance d'authentification.

8. Instance d'authentification (AI1 ; AI2 ; AI3) selon la revendication 7 comprenant en outre une unité de cryptage de message (MEU), cryptant les messages sortants.

9. Client (C1 ; C2 ; C3) comprenant
- une unité d'entrée/sortie (IO-U2) pour échanger des informations avec des parties du réseau de communication,
- un dispositif de mesure (MD), enregistrant des formes de données biométriques d'un utilisateur,
- une unité de cryptage (EU) cryptant des données biométriques,
- un dispositif d'interface d'utilisateur (UI) pour échanger des informations entre l'utilisateur et le client, et
- une unité centrale (CPU), traitant les informations et coordonnant les unités,
**caractérisé en ce que**
il comprend un moyen pour identifier une forme sélectionnée aléatoirement par l'instance d'authentification (AI1 ; AI2 ; AI3) parmi une pluralité de formes de données biométriques mémorisées pour le client, dans lequel le moyen d'identification de la forme utilise un générateur de nombre aléatoire calculant un nombre aléatoire avec la même graine comme un générateur de nombre aléatoire utilisé par l'instance d'authentification pour sélectionner la forme.

10. Client (C1 ; C2 ; C3) selon la revendication 9, comprenant en outre une unité d'extraction de caractéristique(FEU), réduisant une forme de données biométriques à leurs caractéristiques significatives.

11. Client (C1 ; C2 ; C3) selon la revendication 9 ou 10, comprenant en outre une mémoire d'identification du matériel (HWID), mémorisant un numéro d'identification du matériel.

12. Logiciel chargeable dans une instance d'authentification (AI1 ; AI2 ; AI3), **caractérisé en ce que** le logiciel est adapté afin de commander l'instance d'authentification (AI1 ; AI2 ; AI3) d'une manière telle qu'elle mette en oeuvre un procédé selon une quelconque des revendications 2 à 3.

13. Logiciel chargeable dans un client (C1 ; C21 ; C3), **caractérisé en ce que** il est adapté afin de commander le client (C1 ; C2 ; C3) d'une manière telle qu'il mette en oeuvre un procédé selon une quelconque des revendications 4 à 6.
